# EUROPÄISCHE PATENTANMELDUNG

(11) **EP 4 249 761 A1**
(43) Veröffentlichungstag der Anmeldung: **27.09.2023**
(21) Anmeldenummer: 22164071.7
(22) Anmeldetag: 24.03.2022
(51) Int. Cl.: F16D 3/58, F16D 3/68

(54) **DREHELASTISCHE KUPPLUNG**

(71) Anmelder: Flender GmbH, 46395 Bocholt (DE)
(72) Erfinder: KLEINEWEGEN, Stefan, 46395 Bocholt (DE)
(74) Vertreter: Michalski Hüttermann & Partner Patentanwälte mbB

(57) **Zusammenfassung**

Die Erfindung betrifft eine drehelastische Kupplung 10 zum Verbinden einer Antriebswelle 2 mit einer Abtriebswelle 4, mit einem ersten Kupplungsteil 12 und einem zweiten Kupplungsteil 14. Es sind mehrere hantelförmige Pufferelemente 16 mit zwei über einen Mittelbereich 18 verbundenen Endpuffern 20 vorgesehen, wobei die Pufferelemente 16 auf einem Kreisbogen des ersten Kupplungsteils 12 über den jeweiligen Mittelbereich 18 in geschlitzten Radialstegen 22 des ersten Kupplungsteils 12 gehalten sind. Das zweite Kupplungsteil 14 weist axial gerichtete und in einer Betriebssituation zwischen Pufferelementen 16 einsitzende Mitnehmer 24 auf. Um Zugspannungen während des Betriebes aufzunehmen ist eine den Radialstegen 22 zugewandte Kontaktfläche 26 der Pufferelemente 16 durch eine Gewebeeinlage 28 gebildet. Hierdurch kann die Leistungsdichte der Kupplung 10 gesteigert werden, ohne Rissneigung der Pufferelemente 16.

## Beschreibung

Die Erfindung betrifft eine drehelastische Kupplung zum Verbinden einer Antriebswelle mit einer Abtriebswelle, mit einem erstes Kupplungsteil und einem zweiten Kupplungsteil, mehreren hantelförmigen Pufferelementen mit zwei über einen Mittelbereich verbundenen Endpuffem, wobei die Pufferelemente auf einem Kreisbogen des ersten Kupplungsteils über den jeweiligen Mittelbereich in geschlitzten Radialstegen des ersten Kupplungsteils gehalten sind und wobei das zweite Kupplungsteil axial gerichtete und in einer Betriebssituation zwischen Pufferelementen einsitzende Mitnehmer aufweist.

Aus der DE 1 965 000 U ist eine drehelastische Kupplung bekannt. Derartige Kupplungen werden eingesetzt, um in einer Anlage Antriebsmotoren mit einer Arbeitsmaschine, ggf. auch mittelbar über ein Getriebe, zu verbinden und über die Kupplung ein Drehmoment zu übertragen. Bei diesen Anwendungen führt ein ungeplantes aber auch ein geplantes Stillsetzen des Antriebsmotors zu einem Produktionsausfall der Anlage mit entsprechenden Folgekosten. Während des Betriebs entstehend durch das übertragene Drehmoment in den Pufferelementen Zugspannungen, die zu Rissen in dem Material eines der oder der Pufferelemente führen können. Insbesondere bei einer Erhöhung der Leistungsdichte der Anlage besteht ein Bedürfnis die Rissneigung in dem Material der Pufferelemente deutlich zu reduzieren oder sogar zu eliminieren.

Es ist die Aufgabe der Erfindung Maßnahmen aufzuzeigen, die eine verbesserte Haltbarkeit einer Kupplung ermöglichen.

Die Lösung der Aufgabe erfolgt durch eine drehelastische Kupplung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine drehelastische Kupplung zum Verbinden einer Antriebswelle mit einer Abtriebswelle, mit einem ersten Kupplungsteil und einem zweiten Kupplungsteil, mehreren hantelförmigen Pufferelementen mit zwei über einen Mittelbereich verbundenen Endpuffern, wobei die Pufferelemente auf einem Kreisbogen des ersten Kupplungsteils über den jeweiligen Mittelbereich in geschlitzten Radialstegen des ersten Kupplungsteils gehalten sind und wobei das zweite Kupplungsteil axial gerichtete und in einer Betriebssituation zwischen Pufferelementen einsitzende Mitnehmer aufweist und wobei eine den Radialstegen zugewandte Kontaktfläche der Pufferelemente durch eine Gewebeeinlage gebildet ist.

Die Kupplungsteile können auch als Kupplungshälften bezeichnet werden, auch wenn es sich bei einer Hälfte nicht um den halben Anteil im geometrischen Sinne handelt. In der Betriebssituation sind die beiden Kupplungsteile in der Lage ein Drehmoment zu übertragen. Eine Antriebsdrehung zur Drehmomentübertragung erfolgt hierbei um eine Drehachse, die durch ihre Lage eine Axialrichtung der Kupplung beschreibt. Ausgehend von dieser Axialrichtung ergeben sich die Radialrichtungen. Der Kreisbogen bezieht sich ebenfalls auf die Axialrichtung der Drehachse, so dass ein Punkt auf der Drehachse den Mittelpunkt des Kreisbogens bildet. In der Kreisfläche innerhalb des Kreisbogens liegen folglich die Radialrichtungen.

Die Pufferelemente sind hantelförmig ausgeformt und ihre Form kann auch als H-förmig bezeichnet werden, insbesondere in einer Axialansicht betrachtet. Die Pufferelemente weisen eine Haupterstreckungsrichtung auf, auf der der Mittelbereich und die Endpuffer liegen, die sich ausgehend von dem Mittelbereich zu beiden Seiten erstrecken. Die Pufferelemente sind auf dem Kreisbogen derart angeordnet, dass ihre Haupterstreckungsrichtung auf dem Kreisbogen liegt.

Die geschlitzten Radialstege verlaufen in dem ersten Kupplungsteil zwischen einer Nabe und einem mit der Nabe verbundenen Gehäusering. Die mehreren Radialstege sind umfänglich gleichmäßig beabstandet angeordnet. Der Schlitz befindet sich Wesentlichen in radialer Richtung betrachtet mittig in den Steg. Der Schlitz kann in axialer Richtung eine derartige Tiefe aufweisen, dass er von einem radial durchgehenden Abschnitt des jeweiligen Stegs begrenzt wird.

Über Kontaktflächen liegt das jeweilige Pufferelement an dem Radialsteg an. Die Kontaktfläche, die durch eine Gewebeeinlage gebildet ist und dem Radialsteg zugewandt ist, kann durchgängig sein oder aus einzelnen Abschnitten bestehend. Es kann auch vorgesehen sein, dass ein Pufferelement eine oder mehrere weiteren Kontaktflächen aufweist, die den jeweiligen Radialsteg kontaktieren aber nicht durch eine Gewebeeinlage gebildet werden. In diesen Fall liegt das Grundmaterial des Pufferelements unmittelbar an dem Radialsteg an. Bevorzugt ist vorgesehen, dass die Gewebeeinlage weitestgehend mit dem Grundmaterial des Pufferelements verschmolzen ist. Während des Betriebs bzw. unter Lasteinwirkung wird das Pufferelement gleichzeitig durch den jeweiligen Schlitz des Radialstegs gedrückt und zwischen dem zweiten Kupplungsteil und der Wandung des Radialstegs gepresst. Die hierdurch in das Pufferelement eingeleiteten Zugspannungen werden über die Gewebeeinlage aufgenommen, so dass die Zugspannungen nicht in dem Grundmaterial des Pufferelements entstehen können und dort keine Rissneigung besteht. Da die Gewebeeinlage insgesamt höhere Zugspannungen als das Grundmaterial des Pufferelements aufnehmen kann, ist es möglich die Leistungsdichte der drehelastischen Kupplung zu erhöhen, da höhere Drehmomente übertragen werden können, ohne dass die Gefahr der Rissbildung besteht. Das Grundmaterial kann beispielsweise aus einem Nitrilkautschuk, abgekürzt NBR, bestehen. Hierbei handelt es ich um einen Werkstoff mit einer hohen Elastizität und einem guten Dämpfungsvermögen. Die allerdings begrenzte Belastbarkeit dieses Werkstoffs wird durch die vorgesehene Gewebeeinlage, die die Kontaktfläche bildet, ausgeglichen, so dass Risse im Grundmaterial auch bei einer deutlich höheren Pressung infolge des höheren übertragenen Drehmoments vermieden werden können.

In einer bevorzugten Ausgestaltung ist vorgesehen, dass sich die durch die Gewebeeinlage gebildete Kontaktfläche ausgehend von dem Mittelbereich auf die einander zugewandten Flanken der Endpuffer erstreckt. Hierdurch ist gewährleistet, dass insbesondere die Übergangsbereiche von dem Mittelbereich zu den Flanken der Endpuffer von der höheren Belastbarkeit der Gewebeeinlage profitieren. Insbesondere ist bevorzugt vorgesehen, dass in radialer Richtung betrachtet beidseitig des Mittelbereichs eine durch die Gewebeeinlage gebildete Kontaktfläche angeordnet ist. Hierdurch ist eine noch höhere Sicherheit gegen Rissbildung infolge Zugspannungen während des Betriebs gegeben.

In einer zudem bevorzugten Ausgestaltung sitzen die durch die Gewebeeinlage gebildete Kontaktfläche in einer Oberflächensenke des Pufferelements ein, wobei eine Tiefe der Oberflächensenke und eine Dicke der Kontaktfläche sich in ihrem Maß im Wesentlichen entsprechen. Hierdurch trägt die durch die Gewebeeinlage gebildete Kontaktfläche nicht gegenüber dem Grundmaterial des Pufferelements auf, verglichen mit einem herkömmlichen Pufferelement ohne verstärkende Gewebeeinlage. In konkreter Ausgestaltung kann vorgesehen sein, dass die durch die Gewebeeinlage gebildete Kontaktfläche eine Dicke mit einem Maß zwischen 0,1mm und 0,5mm, bevorzugt zwischen 0,2mm und 0,3mm aufweist.

In einer zudem bevorzugten Ausgestaltung ist vorgesehen, dass das Material der Gewebeeinlage eine geringere Elastizität als das Material des Pufferelements aufweist. Hierüber lässt sich insbesondere die deutliche höhere Belastbarkeit gegenüber Zugspannungen darstellen.

Unter fertigungstechnischen Gesichtspunkten ist bevorzugt vorgesehen, dass das Material des Pufferelements aus einem Elastomer bzw. einem Nitrilkautschuk besteht und das Material zur Herstellung des Pufferelements zusammen mit der Gewebeeinlage in einer Form unter Temperatur verpresst wird. Hierdurch lässt sich in vorteilhafter Weise das zuvor bereits erläuterte Nicht-Auftragen der durch die Gewebeeinlage gebildeten Kontaktfläche gegenüber dem Grundmaterial, im Vergleich zu herkömmlichen Pufferelementen, realisieren. Bei einem entsprechenden Fertigungsverfahren werden das Grundmaterial und die zunächst separaten Gewebestrukturen in eine die Form eingelegt und die Gewebestrukturen mit dem Grundmaterial verpresst.

Die Aufgabenstellung wird zudem gelöst durch einen Antriebsstrang, umfassend eine als Antriebswelle ausgebildete erste Welle, die über eine Kupplung mit einer als Abtriebswelle ausgebildeten zweiten Welle drehmomentübertragend gekoppelt ist, wobei die Kupplung wie beschrieben ausgebildet ist. Das Antriebsmittel kann beispielsweise als Elektromotor ausgeführt sein. Durch das Antriebsmittel wird über die Antriebswelle eine Antriebsleistung bereitgestellt. Die Abtriebswelle kann mit einer mechanischen Anmeldung gekoppelt sein.

Desweiteren wird die Aufgabe durch eine Industrieapplikation gelöst, umfassend eine Antriebseinheit, die mit einer Abtriebseinheit über eine Kupplung drehmomentübertragend verbunden ist, wobei die Kupplung wie beschrieben ausgebildet ist. Bei der Abtriebseinheit kann es sich um eine mechanische Anmeldung handeln, in der über die Kupplung übertragene mechanische Energie genutzt werden kann. Bei der mechanischen Anwendung handelt es sich beispielsweise um ein Förderband, Pumpe, Kran, Lüfter, Rührwerk, Hubvorrichtung.

Die Lösung der zugrundeliegenden Aufgabenstellung erfolgt zudem durch eine Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen sämtlicher Bestandteile einer wie vorstehend beschriebenen Kupplung, wobei die Datenpakete dazu hergerichtet sind bei einer Verarbeitung durch eine Datenverarbeitungseinrichtung eine additive Herstellung der Bestandteile der Kupplung, insbesondere durch 3D-Druck mittels eines 3D-Druckers, und/oder eine Simulation des Betriebsverhaltens der Kupplung durchzuführen. Unter Betriebsverhalten ist beispielweise ein Biegeverhalten, ein Überlastverhalten oder ein Verschleißverhalten der Kupplung oder einzelner Komponenten zu verstehen. Auch eine Kinematik und/oder eine Schwingungscharakteristik der Kupplung können simuliert werden. Das Betriebsverhalten der Kupplung ist dadurch in einem montierten Zustand beispielsweise in einer Industrieapplikation simulierbar. Die Datenagglomeration ermöglicht eine kostengünstige Herstellung von Prototypen und/oder computerbasierten Simulationen, um die Funktionsweise der Kupplung zu studieren, Probleme im konkreten Anwendungsfall zu identifizieren und Verbesserungen zu finden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine elastische Kupplung in a) einer teilgeschnittenen Seitenansicht und b) einer perspektivischen Ansicht;
Fig. 2: einen perspektivischen Axialschnitt durch Mitnehmer des zweiten Kupplungsteils einer Kupplung gemäß Fig. 1:
Fig. 3: einen perspektivischen Axialansicht durch das zweite Kupplungsteil einer Kupplung gemäß Fig. 1;
Fig. 4: ein Pufferelement als Einzelheit in perspektivischer Ansicht und
Fig. 5: eine schematische Darstellung einer Industrieapplikation mit einer Kupplung.

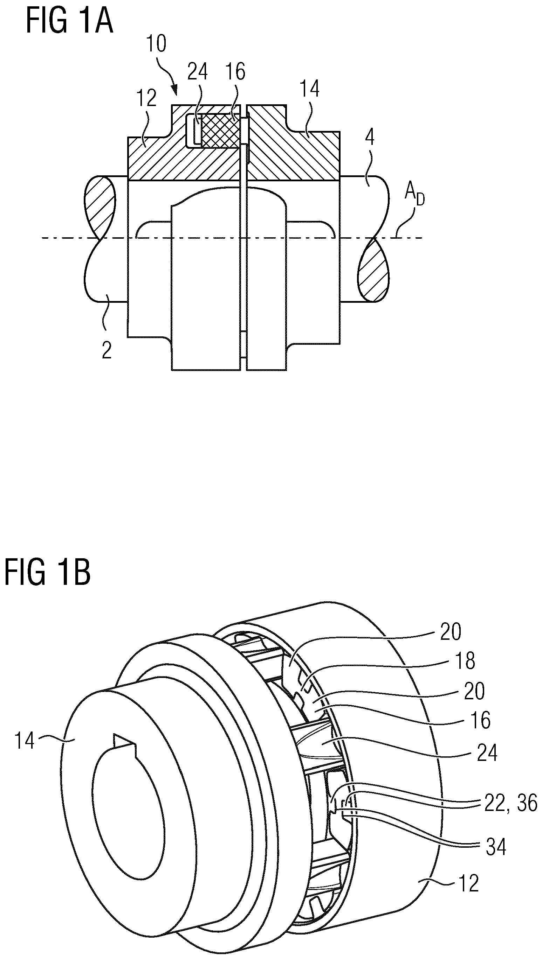

Die Figur 1 zeigt eine elastische Kupplung 10; in der Ansicht a) in einer teilgeschnittenen Seitenansicht und in der Ansicht b) in einer perspektivischen Darstellung. Die Kupplung 10 besteht strukturell aus einem ersten Kupplungsteil 12 und einem zweiten Kupplungsteil 14, die in noch zu beschreibender Weise zur Übertragung eines Drehmoments formschlüssig miteinander verbunden sind. Das erste Kupplungsteil 12 kann über eine im allgemeinen bekannten Welle-Nabe-Verbindung mit einer als Antriebswelle fungierenden ersten Welle 2 antriebsverbunden sein. Das zweite Kupplungsteil 14 kann entsprechend mit einer als Abtriebswelle fungierenden zweiten Welle 4 antriebsverbunden sein. Die erste Welle 2 kann mit einem nicht dargestellten Antriebsmotor verbunden sein. Die zweite Welle 4 kann mit einer nicht dargestellten Arbeitsmaschine verbunden sein. Grundsätzlich kann allerdings ein bidirektionaler Drehmomentfluss vorgesehen sein, wenn beispielsweise der Antriebsmotor als elektrische Maschine ausgeführt ist und abhängig von dem jeweiligen Betriebszustand motorisch oder generatorisch betrieben wird. Eine Antriebsdrehung zur Drehmomentübertragung erfolgt um eine Drehachse A_{D} der Kupplung 10. Die Drehachse A_{D} beschreibt durch ihre Lage eine Axialrichtung der Kupplung 10.

Das erste Kupplungsteil 12 weist auf einem Kreisbogen um die Drehachse A_{D} mehrere umfänglich gleichmäßig beabstandete geschlitzte Radialstege 22 auf. Die Radialstege 22 werden jeweils durch zwei auf einem Radius liegende und durch einen Schlitz 34 beabstandete Stegabschnitte 36 gebildet. Auf den geschlitzten Radialstegen 22 ist jeweils ein Pufferelement 16 gehalten bzw. eingespannt. Die Pufferelemente 16 sind hantelförmig gestaltet, mit zwei Endpuffer 20 und einem die Endpuffer 20 verbindenden Mittelbereich 18. Die Pufferelemente 16 sind derart auf den Radialstegen 22 gehalten, dass der Mittelbereich 18 in dem Schlitz 34 einsitzend zwischen den Stegabschnitte 36 klemmt und die Endpuffer 20 mit ihren einander zugewandten Flanken 30 die Stegabschnitte 36 umgreifen.

Das zweite Kupplungsteil 14 weist ebenfalls auf einem Kreisbogen um die Drehachse A_{D} eine der Anzahl der Radialstege 22 entsprechende Anzahl axial gerichtete Mitnehmer 24 auf. Die Mitnehmer 24 sitzen in einer Betriebssituation, in der eine Drehmomentübertragung erfolgen kann, zwischen den Pufferelementen 16 des ersten Kupplungsteils 14 ein. Über den Formschluss der zwischen den Pufferelementen 16 einsitzenden Mitnehmern 24 ist eine Drehmomentübertragung möglich. In der Figur 1b) ist aus Darstellungsgründen eine relative Position der beiden Kupplungsteile 12, 14 zu einander gezeigt, in der diese ein gewisses Maß axial auseinander gezogen sind.

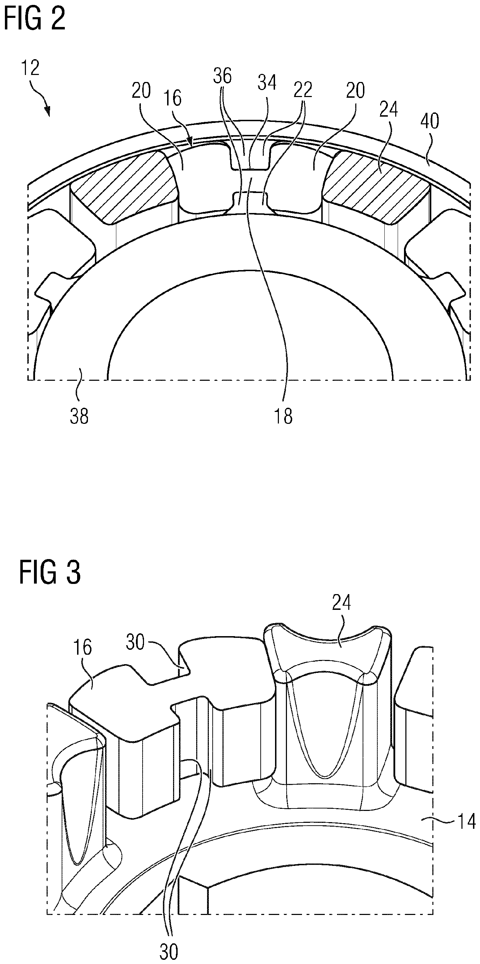

Die Figur 2 zeigt als Detailierung einen perspektivischen Axialschnitt durch die Mitnehmer 24 des zweiten Kupplungsteils 14. Zu erkennen ist insbesondere die hantelförmige Ausgestaltung der Pufferelemente 16, die auch als H-förmig bezeichnet werden kann. Zu erkennen ist ferner, wie das Pufferelement 16 auf dem jeweiligen geschlitzten Radialstegen 22 gehalten bzw. eingespannt ist. Die Pufferelemente 16 sind derart auf den Radialstegen 22 gehalten, dass der Mittelbereich 18 in dem Schlitz 34 einsitzend zwischen den Stegabschnitte 36 klemmt und die Endpuffer 20 mit ihren einander zugewandten Flanken 30, vgl. hierzu Figur 3, die Stegabschnitte 36 umgreifen. Die geschlitzten Radialstege 22 verlaufen in dem ersten Kupplungsteil 12 zwischen einer radial inneren Nabe 38 und einem mit der Nabe 38 verbundenen radial äußeren Gehäusering 40.

Die Figur 3 zeigt eine weitere Detaillierung, in der das erste Kupplungsteil 12 bis auf die Pufferelemente 16 ausgeblendet ist. Zu erkennen ist das zweite Kupplungsteil 14 und ein zwischen den Mitnehmern 24 umfänglich einsitzendes Pufferelement 16.

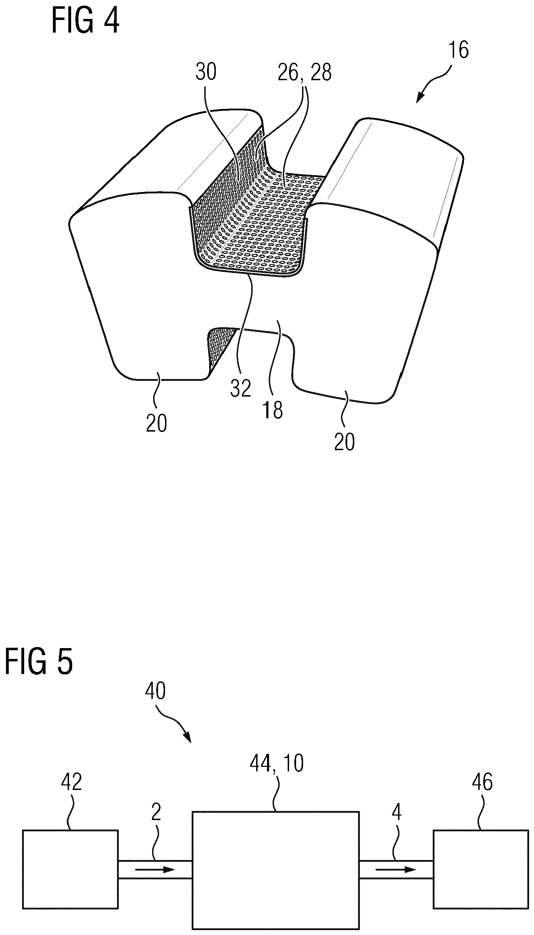

Die Figur 4 zeigt als Einzelheit perspektivisch dargestellt ein Pufferelement 16. Unter Einbeziehung der vorherigen Beschreibung ist ersichtlich, dass ein Pufferelement 16 über Kontaktflächen 26 an dem jeweiligen Radialsteg 22 anliegt bzw. über die Kontaktflächen 26 den Radialsteg 22 berührt. Bei dem vorliegend beschriebenen Pufferelement 16 sind dem Radialsteg 22 zugewandte Kontaktflächen 26 eines Pufferelements 16 durch eine Gewebeeinlage 28 gebildet. Dargestellt ist eine Ausführung des Pufferelements 16, bei der in radialer Richtung betrachtet beidseitig des Mittelbereichs 18 eine durch die Gewebeeinlage 28 gebildete Kontaktfläche 26 angeordnet ist. Alternativ ist aber auch denkbar, dass die durch die Gewebeeinlage 28 gebildete Kontaktfläche 26 in radialer Richtung betrachtet nur auf einer Seite des Mittelbereichs 18 angeordnet ist. Zudem ist bei der dargestellten Ausführung des Pufferelements 16 vorgesehen, dass die durch die Gewebeeinlage 28 gebildete Kontaktfläche 26 ausgehend von dem Mittelbereich 18 sich auf die einander zugewandten Flanken 30 der Endpuffer 20 erstreckt. Die durch die Gewebeeinlage 28 gebildete Kontaktfläche 26 sitzt in einer Oberflächensenke 32 des Pufferelements 16 ein, wobei eine Tiefe der Oberflächensenke 32 und eine Dicke der Gewebeeinlage 28 sich in ihrem Maß im Wesentlichen entsprechen.

Die Figur 5 zeigt einen schematischen Aufbau einer Ausführungsform der beanspruchten Industrie-Applikation 42, die eine Antriebseinheit 44 umfasst, die als Elektromotor, Verbrennungsmotor oder Hydraulikmotor ausgebildet sein kann. Durch die Antriebseinheit 44 wird über eine Antriebswelle 2 eine Antriebsleistung bereitgestellt, die über eine Kupplung 10 und eine Abtriebswelle 4 zu einer Abtriebseinheit 44 übertragen werden kann. Die Kupplung 10 ist hierbei wie zuvor beschrieben ausgebildet und/oder weitergebildet.

### Bezugszeichenliste

- 2: Welle
- 4: Welle
- 10: Kupplung
- 12: Kupplungsteil
- 14: Kupplungsteil
- 16: Pufferelemente
- 18: Mittelbereich
- 20: Endpuffer
- 22: Radialsteg
- 24: Mitnehmer
- 26: Kontaktfläche
- 28: Gewebeeinlage
- 30: Flanke
- 32: Oberflächensenke
- 34: Schlitz
- 36: Stegabschnitt
- 38: Nabe
- 40: Gehäusering
- 42: Industrie-Applikation
- 44: Antriebseinheit
- 46: Abtriebseinheit

## Patentansprüche

1. Drehelastische Kupplung (10) zum Verbinden einer Antriebswelle (2) mit einer Abtriebswelle (4), umfassend
ein erstes Kupplungsteil (12) und ein zweiten Kupplungsteil (14), mehrere hantelförmige Pufferelemente (16) mit zwei über einen Mittelbereich (18) verbundenen Endpuffern (20), wobei die Pufferelemente (16) auf einem Kreisbogen des ersten Kupplungsteils (12) über den jeweiligen Mittelbereich (18) in geschlitzten Radialstegen (22) des ersten Kupplungsteils (12) gehalten sind und
wobei das zweite Kupplungsteil (14) axial gerichtete und in einer Betriebssituation zwischen Pufferelementen (16) einsitzende Mitnehmer (24) aufweist, **dadurch gekennzeichnet, dass**
eine den Radialstegen (22) zugewandte Kontaktfläche (26) der Pufferelemente (16) durch eine Gewebeeinlage (28) gebildet ist.

2. Drehelastische Kupplung (10) nach Anspruch 1, **dadurch gekennzeichnet, dass** sich die durch die Gewebeeinlage (28) gebildete Kontaktfläche (26) ausgehend von dem Mittelbereich (18) auf die einander zugewandten Flanken (30) der Endpuffer (20) erstreckt.

3. Drehelastische Kupplung (10) nach Anspruch 1 oder 2, **dadurch gekennzeichnet, dass** in radialer Richtung betrachtet beidseitig des Mittelbereichs (18) eine durch die Gewebeeinlage (28) gebildete Kontaktfläche (26) angeordnet ist.

4. Drehelastische Kupplung (10) nach einem der Ansprüche 1 bis 3, **dadurch gekennzeichnet, dass** die durch die Gewebeeinlage (28) gebildete Kontaktfläche (26) in einer Oberflächensenke (32) des Pufferelements (16) einsitzt, wobei eine Tiefe der Oberflächensenke (32) und eine Dicke der Gewebeeinlage (28) sich in ihrem Maß im Wesentlichen entsprechen.

5. Drehelastische Kupplung (10) nach Anspruch 4, **dadurch gekennzeichnet, dass** die Gewebeeinlage (28) eine Dicke mit einem Maß zwischen 0,1mm und 0,5mm, bevorzugt zwischen 0,2mm und 0,3mm aufweist.

6. Drehelastische Kupplung (10) nach einem der Ansprüche 1 bis 5, **dadurch gekennzeichnet, dass** das Material der Gewebeeinlage (28) eine geringere Elastizität als das Material des Pufferelements (16) aufweist.

7. Drehelastische Kupplung (10) nach einem der Ansprüche 1 bis 6, **dadurch gekennzeichnet, dass** das Material des Pufferelements (16) aus einem Elastomer besteht und das Material zur Herstellung des Pufferelements (16) zusammen mit der Gewebeeinlage (28) in einer Form unter Temperatur verpresst wird.

8. Antriebsstrang (52), umfassend eine als Antriebswelle ausgebildete erste Welle (2), die über eine Kupplung (10) mit einer als Abtriebswelle ausgebildeten zweiten Welle (4) drehmomentübertragend gekoppelt ist, **dadurch gekennzeichnet, dass** die Kupplung (10) nach einem der Ansprüche 1 bis 7 ausgebildet ist.

9. Industrieapplikation (42), umfassend eine Antriebseinheit (44), die mit einer Abtriebseinheit (46) über eine Kupplung drehmomentübertragend verbunden ist, **dadurch gekennzeichnet, dass** die Kupplung (10) nach einem der Ansprüche 1 bis 7 ausgebildet ist.

10. Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen sämtlicher in einer Kupplung (10) nach einem der Ansprüche 1 bis 7 vorgesehenen Bestandteile, wobei die Datenpakete dazu hergerichtet sind bei einer Verarbeitung durch eine Datenverarbeitungseinrichtung eine additive Herstellung der Bestandteile der Kupplung (10), insbesondere durch 3D-Druck mittels eines 3D-Druckers, und/oder eine Simulation des Betriebsverhaltens der Kupplung (10) durchzuführen.
